# EUROPEAN PATENT SPECIFICATION

(11) **EP 2 202 272 B1**
(45) Date of publication and mention of the grant of the patent: **08.02.2012**
(21) Application number: 09180623.2
(22) Date of filing: 23.12.2009
(51) Int. Cl.: C08L 25/00, C08L 67/04, C08L 33/00, C08L 51/00

(54) **Polyhydroxy alkanoate resin composition and molded product made using the same**
Polyhydroxyalkonoat-Harzzusammensetzung und damit hergestelltes Formprodukt
Composition de résine de polyhydroxyalkanoate et produit moulé fabriqué en l'utilisant

(30) Priority: 24.12.2008 KR 20080133697
(43) Date of publication of application: 30.06.2010
(73) Proprietor: CHEIL INDUSTRIES INC., Kumi-city, Kyungsangbuk-do (KR)
(72) Inventor: Chung, Young-Mi, Uiwang-si, Gyeonggi-do (KR); Jung, Chang-Do, Uiwang-si, Gyeonggi-do (KR); Ha, Doo-Han, Uiwang-si, Gyeonggi-do (KR)
(74) Representative: Bublak, Wolfgang

(56) References cited:
- EP-A1- 1 721 936
- EP-A1- 1 911 807
- EP-A1- 1 942 001

## Description

This disclosure relates to a polyhydroxy alkanoate resin composition and a molded product made using the same.

In general, plastics may be easily manufactured and used but are difficult to recycle, and accordingly, they are usually discarded after use. Since this discarded plastic is typically buried in a landfill or burned, it can decrease available landfill space and cause various environment problems. For example, discarded plastics can negatively influence the environment because non-degradable plastic residue can contaminate the ecology, generate harmful gas during burning, contribute to global warming due to the amount of heat generated, and the like. Accordingly, biodegradable plastics have recently been developed to solve the plastic waste problem.

Biodegradable plastics can be classified as aliphatic polyesters produced by microorganisms, for example polyhydroxy alkanoates and the like; chemically-synthesized aliphatic polyesters such as polylactic acid, polycaprolactone, and the like; and natural polymers such as starch, cellulose acetate, and the like.

Since chemically-synthesized aliphatic polyester generally is not anaerobicly decomposed, it has some constraints in decomposition. Also, polylactic acid or polycaprolactone have low heat resistance. In addition, since starch is non-thermoplastic, it may be easily broken, and also has a problem of decreased water resistance.

In contrast, polyhydroxy alkanoates can be very degradable under both aerobic and anaerobic environments and does not produce harmful gas while being burned. In addition, polyhydroxy alkanoates are made by microorganisms using plant materials and can be polymerized, but do not increase carbon dioxide in the atmosphere, and thus are "carbon neutral." In addition, polyhydroxy alkanoates have many excellent advantages such as degradability, water resistance, and polymerization under anaerobic conditions. Properties such as melting point, heat resistance, and fluidity of polyhydroxy alkanoates can also be controlled.

Since polyhydroxy alkanoates are made of plant materials, they can provide a good solution to the problems associated with plastic waste because they are remarkably environment-friendly, and can be used for various molded products such as packaging materials, dish materials, building materials, engineering materials, farm materials, floriculture materials, auto interior materials, adsorption materials, carriers, and filters, among others.

WO05/054366 discloses a resin composition prepared by mixing polyhydroxy alkanoate and a natural fiber. Japanese Patent Laid-Open Publication No. 2004-536897 discloses a biodegradable resin composition prepared by mixing polyhydroxy alkanoate and polylactic acid. However, a composition prepared by mixing the polyhydroxy alkanoate and a thermoplastic resin has not been disclosed.

It is the object of the present invention to provide a polyhydroxy alkanoate resin composition having excellent mechanical strength and impact strength, and improved heat resistance.

Furthermore, the present invention provides a molded product fabricated using the polyhydroxy alkanoate resin composition.

According to one aspect of the present invention, provided is a polyhydroxy alkanoate resin composition including: (A) a polyhydroxy alkanoate resin; and (B) a vinyl-based copolymer resin including (B-1) a copolymer including two or more monomers comprising an aromatic vinyl monomer, an unsaturated nitrile monomer, an acryl-based monomer, or a combination thereof and (B-2) a rubber-modified vinyl-based graft copolymer. The polyhydroxy alkanoate resin composition may include the polyhydroxy alkanoate resin (A) in an amount of about 10 to about 50 wt% and the vinyl-based copolymer resin (B) in an amount of about 50 to about 90 wt%.

The polyhydroxy alkanoate resin (A) is an aliphatic polyester including a repeating unit represented by the following Chemical Formula 1.

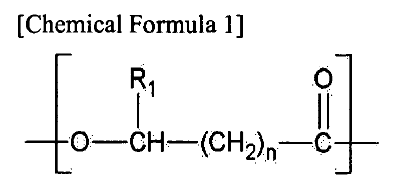

In the above Chemical Formula 1,
R₁ is hydrogen or substituted or unsubstituted C1 to C15 alkyl, and
n is an integer of 1 or 2.

The vinyl-based copolymer resin (B) may include the copolymer (B-1) in an amount of about 40 to about 80 wt%, and the rubber-modified vinyl-based graft copolymer (B-2) in an amount of about 20 to about 60 wt%.

The rubber-modified vinyl-based graft copolymer (B-2) may be prepared by grafting about 5 to about 95 wt% of a vinyl-based polymer including about 50 to about 95 wt% of a first vinyl-based monomer comprising an aromatic vinyl monomer, an acryl-based monomer, or a combination thereof, and about 5 to about 50 wt% of a second vinyl-based monomer comprising an unsaturated nitrile monomer, an acryl-based monomer, or a combination thereof, into about 5 to about 95 wt% of a rubber polymer comprising a butadiene rubber, an acryl rubber, an ethylene/propylene rubber, a styrene/butadiene rubber, an acrylonitrile/butadiene rubber, an isoprene rubber, an ethylene-propylene-diene terpolymer (EPDM), a polyorganosiloxane/polyalkyl(meth)acrylate rubber composite, or a combination thereof.

The polyhydroxy alkanoate resin composition may further include (C) an impact-reinforcing agent. The polyhydroxy alkanoate resin composition may include the impact-reinforcing agent (C) in an amount of about 0.01 to about 20 parts by weight, based on about 100 parts by weight of (A) the polyhydroxy alkanoate resin and (B) the vinyl-based copolymer resin. The impact-reinforcing agent may be a core-shell copolymer prepared by grafting more than one monomer comprising an acryl-based monomer, an aromatic vinyl monomer, an unsaturated nitrile monomer, or a combination thereof, into a rubber polymer prepared by polymerizing a monomer comprising a diene-based monomer, an acryl-based monomer, a silicon-based monomer, or a combination thereof.

The polyhydroxy alkanoate resin composition may further include (D) a poly(meth)acrylic acid alkyl ester resin. The poly(meth)acrylic acid alkyl ester resin (D) may include a repeating unit represented by the following Chemical Formula 2.

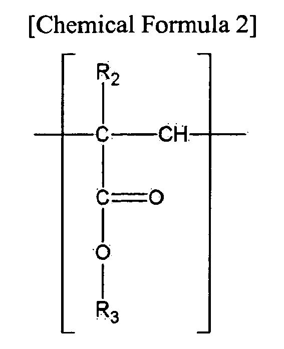

In the above Chemical Formula 2,
R₂ is hydrogen or methyl, and
R₃ is substituted or unsubstituted C1 to C8 alkyl.

According to another aspect of the present invention, provided is a product molded using the polyhydroxy alkanoate resin composition.

Hereinafter, further aspects of the present invention will be described in detail.

The present invention now will be described more fully hereinafter in the following detailed description of the invention, in which some, but not all embodiments of the invention are described.

As used herein, unless a specific definition is otherwise provided, the term "substituted" refers to one substituted with at least one or more substituents selected from halogen, C1 to C30 alkyl, C1 to C30 haloalkyl, C6 to C30 aryl, C1 to C20 alkoxy, or a combination thereof in place of hydrogen.

The term "(meth)acrylate" includes both "acrylate" and "methacrylate."

The term "(meth)acrylic acid alkyl ester" includes "acrylic acid alkyl ester" and "methacrylic acid alkyl ester", and the term "(meth)acrylic acid ester" includes "acrylic acid ester" and "methacrylic acid ester."

According to one embodiment, a polyhydroxy alkanoate resin composition may include a vinyl-based copolymer resin. In particular, the polyhydroxy alkanoate resin composition can include (A) a polyhydroxy alkanoate resin, and (B) a vinyl-based copolymer resin including (B-1) a copolymer including two or more monomers comprising an aromatic vinyl monomer, an unsaturated nitrile monomer, an acryl-based monomer, or a combination thereof, and (B-2) a rubber-modified vinyl-based graft copolymer.

Exemplary components included in the polyhydroxy alkanoate resin composition according to embodiments will hereinafter be described in detail. However, these embodiments are only exemplary, and the present invention is not limited thereto.

### (A) Polyhydroxy alkanoate resin

The polyhydroxy alkanoate resin (A) is an aliphatic polyester including a repeating unit represented by the following Chemical Formula 1. The following repeating unit is derived from a hydroxy alkanoic acid monomer.

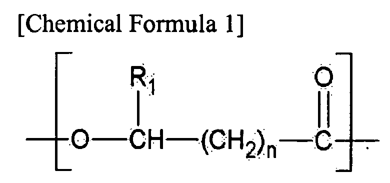

In the above Chemical Formula 1,
R₁ is hydrogen or substituted or unsubstituted C1 to C 15 alkyl, and
n is an integer of 1 or 2.

The polyhydroxy alkanoate resin (A) can include a homopolymer of the hydroxy alkanoic acid monomer; a copolymer including two or more different hydroxy alkanoic acid monomers, for example, a terpolymer, a tetrapolymer, or the like; or a blended material including a homopolymer and a copolymer.

Examples of the hydroxy alkanoic acid monomer may include without limitation 3-hydroxy butyric acid in which n is 1 and R₁ is a methyl group in the repeating unit of Chemical Formula 1, 3-hydroxy valeric acid in which n is 1 and R₁ is an ethyl group in the repeating unit of Chemical Formula 1, 3-hydroxy hexanoic acid in which n is 1 and R₁ is a propyl group in the repeating unit of Chemical Formula 1, 3-hydroxy octanoic acid in which n is 1 and R₁ is a pentyl group in the repeating unit of Chemical Formula 1, and 3-hydroxy octadecanoic acid in which n is 1 and R₁ is a C15 alkyl group in the repeating unit of Chemical Formula 1.

In addition, examples of the copolymer including two or more different hydroxy alkanoic acid monomers may include without limitation poly(3-hydroxy butyric acid-co-3-hydroxy hexanoic acid) which is a copolymer of 3-hydroxy butyric acid and 3-hydroxy hexanoic acid, or poly(3-hydroxy butyric acid-co-3-hydroxy valeric acid) which is a copolymer of 3-hydroxy butyric acid and 3-hydroxy valeric acid. The copolymer may include 3-hydroxy butyric acid in an amount of about 80 to about 99 mol%, and 3-hydroxy hexanoic acid or 3-hydroxy valeric acid in an amount of about 1 to about 20 mol%.

The polyhydroxy alkanoate resin composition of the invention may include the polyhydroxy alkanoate resin (A) in an amount of about 10 to about 50 wt%, for example about 20 to about 40 wt%, based on the total weight (100% by weight) of the polyhydroxy alkanoate resin (A) and the vinyl-based copolymer resin (B). When the polyhydroxy alkanoate resin (A) is included within these ranges, it can provide excellent mechanical strength, impact strength, and heat resistance to the polyhydroxy alkanoate resin composition.

### (B) Vinyl-based copolymer resin

The vinyl-based copolymer resin (B) may include (B-1) a copolymer including two or more monomers comprising an aromatic vinyl monomer, an unsaturated nitrile monomer, an acryl-based monomer, or a combination thereof, and (B-2) a rubber-modified vinyl-based graft copolymer.

The vinyl-based copolymer resin (B) may include the copolymer (B-1) in an amount of about 40 to about 80 wt% and the rubber-modified vinyl-based graft copolymer (B-2) in an amount of about 20 to about 60 wt%. When the vinyl-based copolymer resin (B) includes the copolymer (B-1) and the rubber-modified vinyl-based graft copolymer (B-2) in these amounts, the polyhydroxy alkanoate resin composition may have excellent mechanical strength, impact strength, and heat resistance.

Exemplary aromatic vinyl monomers of the copolymer (B-1) may include without limitation styrene, C1 to C10 alkyl-substituted styrenes, halogen-substituted styrenes, and the like, and combinations thereof. Examples of the alkyl-substituted styrene may include without limitation o-ethyl styrene, m-ethyl styrene, p-ethyl styrene, α-methyl styrene, and the like, and combinations thereof.

Exemplary unsaturated nitrile monomers of the copolymer (B-1) may include without limitation acrylonitrile, methacrylonitrile, ethacrylonitrile, and the like, and combinations thereof.

Exemplary acryl-based monomers of the copolymer (B-1) may include without limitation (meth)acrylic acid alkyl esters, (meth)acrylic acid esters, and the like, and combinations thereof As used herein with reference to the "(meth)acrylic acid alkyl esters," the alkyl is a C1 to C10 alkyl. Examples of the (meth)acrylic acid alkyl ester may include without limitation methyl(meth)acrylate, ethyl(meth)acrylate, propyl(meth)acrylate, butyl(meth)acrylate, and the like, and combinations thereof. Examples of the (meth)acrylic acid ester may include without limitation (meth)acrylate, and the like.

Examples of the copolymer (B-1) may include without limitation a copolymer including styrene, acrylonitrile, and optionally methylmethacrylate; a copolymer including α-methylstyrene, acrylonitrile, and optionally methylmethacrylate; and a copolymer including styrene, α-methylstyrene, acrylonitrile, and optionally methylmethacrylate. These copolymers (B-1) may be prepared using any suitable polymerization technique, such as but not limited to emulsion polymerization, suspension polymerization, solution polymerization, or mass polymerization, and may have a weight average molecular weight ranging from about 15,000 to about 300,000 g/mol.

Another example of the copolymer (B-1) may include without limitation a copolymer including methylmethacrylate and optionally methylacrylate. This copolymer (B-1) also may be prepared using any suitable polymerization technique, such as but not limited to emulsion polymerization, suspension polymerization, solution polymerization, or mass polymerization, and may have a weight average molecular weight ranging from about 20,000 to about 250,000 g/mol.

Still another example of the copolymer (B-1) may include without limitation a copolymer including styrene and maleic anhydride, which may be prepared by continuous mass polymerization or solution polymerization. In this embodiment, the copolymer may include styrene and maleic anhydride in amounts over a wide ratio range. For example, the maleic anhydride may be included in an amount of about 5 to about 50 wt% based on the entire weight of the vinyl-based copolymer (B-1). The weight average molecular weight of the styrene and the maleic anhydride copolymer may also be in a wide range, for example, about 20,000 to about 200,000 g/mol.

The rubber-modified vinyl-based graft copolymer (B-2) may be prepared by graft-polymerizing about 5 to about 95 wt% of a vinyl-based polymer into about 5 to about 95 wt% of a rubber polymer.

The vinyl-based polymer of the rubber-modified vinyl-based graft copolymer (B-2) may be a copolymer including a first vinyl-based monomer comprising an aromatic vinyl monomer, an acryl-based monomer, or a combination thereof in an amount of about 50 to about 95 wt%; and a second vinyl-based monomer comprising an unsaturated nitrile monomer, an acryl-based monomer, or a combination thereof in an amount of about 5 to about 50 wt%. Herein, the first vinyl-based monomer and the second vinyl-based monomer may be different from each other.

Exemplary aromatic vinyl monomers may include without limitation styrene, C1 to C10 alkyl substituted styrenes, halogen substituted styrenes, and the like, and combinations thereof. Examples of the alkyl substituted styrene may include without limitation o-ethyl styrene, m-ethyl styrene, p-ethyl styrene, α-methyl styrene, and the like, and combinations thereof.

Exemplary acryl-based monomers may include without limitation (meth)acrylic acid alkyl esters, (meth)acrylic acid esters, and the like, and combinations thereof. As used herein with reference to the "(meth)acrylic acid alkyl esters," the alkyl indicates a C1 to C 10 alkyl. Examples of the (meth)acrylic acid alkyl ester may include without limitation methyl(meth)acrylate, ethyl(meth)acrylate, propyl(meth)acrylate, butyl(meth)acrylate, and the like, and combinations thereof. Examples of the (meth)acrylic acid ester may include without limitation (meth)acrylate, and the like.

Exemplary unsaturated nitrile monomers may include without limitation acrylonitrile, methacrylonitrile, ethacrylonitrile, and the like, and combinations thereof.

Exemplary rubber polymers of the rubber-modified vinyl-based graft copolymer (B-2) may include without limitation butadiene rubbers, acryl rubbers, ethylene/propylene rubbers, styrene/butadiene rubbers, acrylonitrile/butadiene rubbers, isoprene rubbers, ethylene-propylene-diene terpolymer (EPDM) rubbers, polyorganosiloxane/poly alkyl(meth)acrylate rubber composites, and the like, and combinations thereof.

When the rubber-modified vinyl-based graft copolymer (B-2) is prepared, rubber particles may have a diameter ranging from about 0.05 to about 4 µm to improve impact resistance and surface characteristics of a molded product. When the rubber particles have a diameter within this range, excellent impact strength can be secured.

The rubber-modified vinyl-based graft copolymer (B-2) may be used singly or as a mixture or combination of two or more thereof.

One example of the rubber-modified vinyl-based graft copolymer (B-2) may be prepared by graft-copolymerizing a polymer of styrene, acrylonitrile, and optionally methyl(meth)acrylate into a butadiene rubber, an acryl rubber, or a styrene/butadiene rubber.

Another example of the rubber-modified vinyl-based graft copolymer (B-2) may be prepared by graft-copolymerizing methyl(meth)acrylate into a butadiene rubber, an acryl rubber, or a styrene/butadiene rubber.

The rubber-modified vinyl-based graft copolymer (B-2) is prepared in a method that is well-known to those who have common knowledge in this related field, for example emulsion polymerization, suspension polymerization, solution polymerization, or mass polymerization, and in particular, emulsion polymerization or mass polymerization. For example, the rubber-modified vinyl-based graft copolymer (B-2) may be prepared by adding the aforementioned aromatic vinyl monomer to a rubber polymer using a polymerization initiator.

The polyhydroxy alkanoate resin composition may include the aforementioned vinyl-based copolymer resin (B) in an amount of about 50 to about 90 wt%, and in one embodiment, in an amount of about 60 to about 80 wt%, based on the total weight (100% by weight) of the polyhydroxy alkanoate resin (A) and the vinyl-based copolymer resin (B). When the vinyl-based copolymer resin (B) is included within these ranges, it can provide excellent mechanical strength, impact strength, and heat resistance to the polyhydroxy alkanoate resin composition.

### (C) Impact-reinforcing agent

According to one embodiment, the polyhydroxy alkanoate resin composition may further include an impact-reinforcing agent (C).

The impact-reinforcing agent (C) may be a core-shell copolymer including a rubber core and a shell formed of an unsaturated monomer grafted thereinto.

The core-shell copolymer may be prepared by grafting an unsaturated compound including more than one monomer comprising an acryl-based monomer, an aromatic vinyl monomer, an unsaturated nitrile monomer, or a combination thereof into a rubber polymer prepared by polymerizing a monomer comprising a diene-based monomer, an acryl-based monomer, a silicon-based monomer, or a combination thereof.

The diene-based monomer may include without limitation C4 to C6 butadiene, isoprene, and the like, and combinations thereof. The rubber polymer prepared by polymerizing a diene-based monomer may include without limitation a butadiene rubber, an acryl rubber, a styrene/butadiene rubber, an acrylonitrile/butadiene rubber, an isoprene rubber, an ethylene-propylene-diene terpolymer (EPDM), and the like, or a combination thereof.

Exemplary acryl-based monomers for the rubber plymer may include without limitation methyl(meth)acrylate, ethyl(meth)acrylate, n-propyl(meth)acrylate, n-butyl(meth)acrylate, 2-ethylhexyl(meth)acrylate, hexyl(meth)acrylate, and the like, and combinations thereof. A curing agent such as ethylene glycol di(meth)acrylate, propylene glycol di(meth)acrylate, 1,3-butylene glycol di(meth)acrylate, 1,4-butylene glycol di(meth)acrylate, allyl(meth)acrylate, triallylcyanurate, and the like, and combinations thereof may be used.

Exemplary silicon-based monomers may include without limitation a cyclosiloxane compound comprising hexamethylcyclotrisiloxane, octamethylcyclotetrasiloxane, decamethylcyclopentasiloxane, dodecamethylcyclohexasiloxane, trimethyltriphenylcyclotrisiloxane, tetramethyltetraphenylcyclotetrasiloxane, octaphenylcyclotetrasiloxane, and the like, and combinations thereof. A curing agent such as trimethoxymethylsilane, triethoxyphenylsilane, tetramethoxysilane, tetraethoxysilane, and the like, and combinations thereof can be used.

When the rubber polymer of the impact-reinforcing agent has a rubber average particle diameter ranging from about 0.4 to about 1 µm, the impact reinforcing agent may maintain a good balance between impact resistance and coloring.

Exemplary acryl-based monomers among the unsaturated compounds may include without limitation (meth)acrylic acid alkyl esters, (meth)acrylic acid esters, and the like, and combinations thereof. As used herein with reference to the "(meth)acrylic acid alkyl esters," the alkyl is a C1 to C10 alkyl. Examples of the (meth)acrylic acid alkyl ester may include without limitation methyl(meth)acrylate, ethyl(meth)acrylate, propyl(meth)acrylate, butyl(meth)acrylate, and the like, and combinations thereof. Examples of the (meth)acrylic acid ester may include without limitation (meth)acrylate, and the like. Exemplary aromatic vinyl monomers among the unsaturated compounds may include without limitation styrene, C1 to C10 alkyl substituted styrenes, halogen-substituted styrenes, and the like, and combinations thereof. Examples of the alkyl substituted styrene may include without limitation o-ethyl styrene, methyl styrene, p-ethyl styrene, alphamethyl styrene, and the like, and combinations thereof.

Exemplary unsaturated nitrile monomers among the unsaturated compounds may include without limitation acrylonitrile, methacrylonitrile, ethacrylonitrile, and the like, and combinations thereof.

Exemplary polymers formed of more than one monomer of the unsaturated compounds may include without limitation polymethylmethacrylate and the like.

The core-shell copolymer may include about 50 to about 90 wt% of the rubber polymer and about 10 to about 50 wt% of the unsaturated compound. When the core-shell copolymer includes the rubber polymer and unsaturated compound in the above ratio, the polyhydroxy alkanoate resin (A) and the vinyl-based copolymer resin (B) may have excellent compatibility. As a result, it can have excellent impact-reinforcing effects.

According to one embodiment, the polyhydroxy alkanoate resin composition may include the impact-reinforcing agent (C) in an amount of about 0.01 to about 20 parts by weight, for example about 1 to about 10 parts by weight, based on about 100 parts by weight of (A) the polyhydroxy alkanoate resin and (B) the vinyl-based copolymer resin. When the polyhydroxy alkanoate resin composition includes the impact-reinforcing agent (C) in an amount within these ranges, the impact-reinforcing agent (C) can not only increase impact-reinforcement and heat resistance effects of a polyhydroxy alkanoate resin composition, but also improve mechanical strength such as tensile strength, flexural strength, flexural modulus, and the like.

### (D) Poly(meth)acrylic acid alkyl ester resin

According to one embodiment, the polyhydroxy alkanoate resin composition may further include a poly(meth)acrylic acid alkyl ester resin (D).

The poly(meth)acrylic acid alkyl ester resin (D) may be prepared by preparing a repeating unit represented by the following Chemical Formula 2 by mass polymerization, emulsion polymerization, suspension polymerization, or solution polymerization. The following repeating unit is derived from a (meth)acrylic acid alkyl ester monomer.

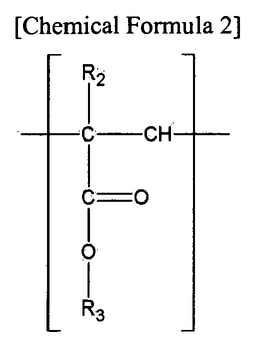

In the above Chemical Formula 2,
R₂ is hydrogen or methyl, and
R₃ is substituted or unsubstituted C1 to C8 alkyl.

Examples of the (meth)acrylic acid alkyl ester monomer including a repeating unit represented by the above Chemical Formula 2 may include without limitation methacrylic acid methyl ester, methacrylic acid ethyl ester, methacrylic acid propyl ester, acrylic acid methyl ester, acrylic acid ethyl ester, and the like, and combinations thereof.

The poly(meth)acrylic acid alkyl ester resin (D) may have a weight average molecular weight ranging from about 10,000 to about 500,000 g/mol, for example, from about 15,000 to about 350,000 g/mol. When a poly(meth)acrylic acid alkyl ester resin (D) having a weight average molecular weight within the above ranges is used, it can contribute to viscosity balance among the resins, and thereby stabilize the phase, and as a result can improve appearance.

The polyhydroxy alkanoate resin composition may include the poly(meth)acrylic acid alkyl ester resin (D) in an amount of about 0.01 to about 20 parts by weight, for example about 5 to about 10 parts by weight, based on about 100 parts by weight of (A) the polyhydroxy alkanoate resin and (B) the vinyl-based copolymer resin. When the polyhydroxy alkanoate resin composition includes the poly(meth)acrylic acid alkyl ester resin (D) in an amount within these ranges, the poly(meth)acrylic acid alkyl ester resin (D) can provide excellent heat resistance and appearance of the polyhydroxy alkanoate resin composition.

### (E) Other additives

According to one embodiment, the polyhydroxy alkanoate resin composition may further include one or more additives.

Exemplary additives may include without limitation antibacterial agents, heat stabilizers, antioxidants, release agents, light stabilizers, compatibilizers, inorganic material additives, surfactants, coupling agents, plasticizers, admixtures, colorants, stabilizers, lubricants, antistatic agents, flame-proofing agents, weather-resistance agents, ultraviolet (UV) ray blocking agents, fillers, nucleating agents, adhesive aids, adhesives, and the like, and combinations and mixtures thereof.

Exemplary antioxidants may include without limitation phenol-type antioxidants, phosphite-type antioxidants, thioether-type antioxidants, amine-type antioxidants, and the like, and combinations thereof. Exemplary release agents may include without limitation fluorine-containing polymers, silicone oils, metal salts of stearic acid, metal salts of montanic acid, montanic acid ester waxes, polyethylene waxes, and the like, and combinations thereof. Exemplary weather-resistance agents may include without limitation benzophenone-type weather-resistance agents, amine-type weather-resistance agents, and the like, and combinations thereof. Exemplary colorants may include without limitation dyes, pigments, and the like, and combinations thereof. Exemplary ultraviolet (UV) ray blocking agents may include without limitation titanium oxide (TiO₂), carbon black, and the like, and combinations thereof. Exemplary filler may include without limitation glass fiber, carbon fiber, silica, mica, alumina, clay, calcium carbonate, sulfuric acid calcium, glass beads, and the like, and combinations thereof. When these fillers are added, they can improve properties such as mechanical strength, heat resistance, and the like. Exemplary nucleating agents may include without limitation talc, clay, and the like, and combinations thereof.

The polyhydroxy alkanoate resin composition may include one or more additives in an amount of about 0.1 to about 30 parts by weight, based on about 100 parts by weight of the (A) polyhydroxy alkanoate resin and (B) the vinyl-based copolymer resin. When the aforementioned additives are included within this range, the additives can respectively impart their own effects for various purposes, and thereby provide excellent mechanical properties and improved surface appearance.

The polyhydroxy alkanoate resin composition according to the invention can be prepared using conventional techniques as known in the art. For example, the components can be mixed, optionally with one or more additives. The mixture can be melt-extruded in an extruder, and then prepared into pellets.

Another embodiment of the invention provides a product molded of the above polyhydroxy alkanoate resin composition. The polyhydroxy alkanoate resin composition may be used for a molded product requiring mechanical strength, impact strength, and heat resistance, for example, electronic parts, office machines, auto materials, miscellaneous parts, and the like. The molded product can be prepared using conventional techniques in the art, such as but not limited to extrusion molding, injection molding, blow molding, and the like.

Hereinafter, the present invention is illustrated in more detail with reference to examples.

### Examples

The components for preparing a polyhydroxy alkanoate resin composition according to exemplary embodiments of the invention are as follows.

### (A) polyhydroxy alkanoate resin

Poly(3-hydroxy butyrate) is used.

### (B) Vinyl-based copolymer resin

### (B-1) Copolymer

A SAN (styrene-acrylonitrile) copolymer is used. It is manufactured as follows. The SAN copolymer is prepared by adding 0.17 parts by weight of azobisisobutyronitrile, 0.4 parts by weight of t-dodecyl mercaptan, and 0.5 parts by weight of tricalciumphosphate to a mixture of 71 parts by weight of styrene, 29 parts by weight of acrylonitrile, and 120 parts by weight of deionized water, and then suspension-polymerizing the resulting mixture at 75°C for 5 hours. This SAN copolymer is washed, dehydrated, and dried to prepare a powder.

### (B-2) Rubber-modified vinyl-based graft copolymer

An ABS (acylonitrile-butadiene-styrene) graft copolymer is used, and it is manufactured as follows. A butadiene rubber latex monomer is added in an amount of 58 parts by weight of butadiene based on 100 parts by weight of a copolymer, and added thereto are additives such as 1.0 parts by weight of oleic acid potassium (an assistant initiator), 0.4 parts by weight of cumene hydroperoxide (an initiator), and 0.3 parts by weight of t-dodecyl mercaptan (a chain-transfer agent), which are necessary for a mixture of 31 parts by weight of styrene, 11 parts by weight of acrylonitrile, and 150 parts by weight of deionized water. The resulting mixture is reacted at 75°C for 5 hours, preparing an ABS graft copolymer. Then, a 1% sulfuric acid solution is added to the produced polymer latex. The resulting product is solidified and dried to prepare a rubber-modified vinyl-based graft copolymer resin having an average particle diameter of 0.3 µm in a powder form.

### (C) Impact-reinforcing agent

METABLENE S-2001 made by Japanese MRC Co. is used.

### (D) Poly(meth)acrylic acid alkyl ester resin

IH-830 made by LG Chem Ltd. as polymethylmethacrylate is used.

### Examples 1 to 4 and Comparative Examples 1 to 3

Each component provided in the following Table 1 is mixed in a conventional mixer and extruded using a conventional twin screw extruder at a temperature ranging from 190 to 210°C. The resulting product is prepared into pellets.

The pellets are dried at 80°C for 4 hours, and then prepared into an ASTM dumbbell specimen using a 6 oz injection-molding machine set to have a cylinder temperature of 200°C, a die temperature of 60°C, and a molding cycle of 30 seconds.

### Experimental Example

The specimens according to Examples 1 to 4 and Comparative Examples 1 to 3 are allowed to stand at 23°C and a relative humidity of 50% for 48 hours. Their properties are measured. The results are provided in the following Table 1.
(1) Tensile strength: measured in accordance with ASTM D638.
(2) Flexural strength: measured in accordance with ASTM D790.
(3) Flexural modulus: measured in accordance with ASTM D790.
(4) IZOD impact strength: measured in accordance with ASTM D256 (specimen thickness 1/8").
(5) Thermal distortion temperature (HDT): measured in accordance with to ASTM D648 (18.5Kg load).

**[Table 1]**

| | | | | | | | | |
|---|---|---|---|---|---|---|---|---|
| (unit: wt%) | | | | | | | | |

| | | Examples | | | | Comparative Examples | | |
|---|---|---|---|---|---|---|---|---|
| | | 1 | 2 | 3 | 4 | 1 | 2 | 3 |
| (A) polyhydroxy alkanoate resin | | 30 | 30 | 40 | 30 | 95 | 75 | 75 |
| (B) vinyl-based copolymer resin | (B-1) | 45 | 45 | 35 | 25 | - | - | 25 |
| | (B-2) | 25 | 20 | 25 | 25 | - | 25 | - |
| (C) impact-reinforcing agent | | - | 5 | - | - | 5 | - | - |
| (D) poly(meth)acrylic acid alkyl ester resin | | - | - | - | 20 | - | - | - |
| tensile strength (kgf/cm²) | | 420 | 400 | 380 | 430 | 210 | 190 | 150 |
| flexural strength (kgf/cm²) | | 470 | 420 | 380 | 500 | 270 | 230 | 190 |
| flexural modulus (kgf/cm²) | | 2712 | 5460 | 24780 | 28940 | 5010 | 4560 | 3510 |
| Impact strength (kgf·cm/cm) | | 4.0 | 4.8 | 3.2 | 6.2 | 3.1 | 2.8 | 1 |
| thermal distortion temperature (°C) | | 80 | 78 | 78 | 65 | 52 | 48 | 49 |
| extrusion possibility | | ○ | ○ | ○ | ○ | ○ | × | × |

As shown in Table 1, Examples 1 to 4 of the invention including both a polyhydroxy alkanoate resin (A) and a vinyl-based copolymer resin (B) all exhibit excellent mechanical strength, impact strength, heat resistance, and workability compared with Comparative Example 1 (no vinyl-based copolymer resin (B)), Comparative Example 2 (including a vinyl-based copolymer (B) including only a rubber-modified vinyl-based graft copolymer (B-2)), and Comparative Example 3 (including a vinyl-based copolymer resin (B) including only a copolymer (B-1)).

Many modifications and other embodiments of the invention will come to mind to one skilled in the art to which this invention pertains having the benefit of the teachings presented in the foregoing description. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation, the scope of the invention being defined in the claims.

## Claims

1. A polyhydroxy alkanoate resin composition comprising:
(A) a polyhydroxy alkanoate resin, wherein the polyhydroxy alkanoate resin (A) is an aliphatic polyester comprising a repeating unit represented by the following Chemical Formula 1: 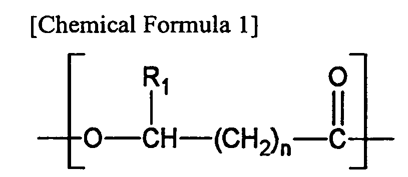 wherein in the above Chemical Formula 1,
R₁ is hydrogen or substituted or unsubstituted C1 to C15 alkyl, and
n is an integer of 1 or 2; and
(B) a vinyl-based copolymer resin comprising (B-1) a copolymer comprising two or more monomers comprising an aromatic vinyl monomer, an unsaturated nitrile monomer, an acryl-based monomer, or a combination thereof, and (B-2) a rubber-modified vinyl-based graft copolymer.

2. The polyhydroxy alkanoate resin composition of claim 1, wherein the polyhydroxy alkanoate resin composition comprises the polyhydroxy alkanoate resin (A) in an amount of about 10 to about 50 wt% and the vinyl-based copolymer resin (B) in an amout of about 50 to about 90 wt%.

3. The polyhydroxy alkanoate resin composition of any of claims 1 to 2, wherein the vinyl-based copolymer resin (B) comprises the copolymer (B-1) in an amount of about 40 to about 80 wt% and the rubber-modified vinyl-based graft copolymer (B-2) in an amount of about 20 to about 60 wt%.

4. The polyhydroxy alkanoate resin composition of any of claims 1 to 3, wherein the rubber-modified vinyl-based graft copolymer (B-2) is prepared by grafting about 5 to about 95 wt% of a vinyl-based polymer comprising about 50 to about 95 wt% of a first vinyl-based monomer comprising an aromatic vinyl monomer, an acryl-based monomer, or a combination thereof; and about 5 to about 50 wt% of a second vinyl-based monomer comprising an unsaturated nitrile monomer, an acryl-based monomer, or a combination thereof into about 5 to about 95 wt% of a rubber polymer comprising a butadiene rubber, an acryl rubber, an ethylene/propylene rubber, a styrene/butadiene rubber, an acrylonitrile/butadiene rubber, an isoprene rubber, an ethylene-propylene-diene terpolymer (EPDM), a polyorganosiloxane/poly alkyl(meth)acrylate rubber composite, or a combination thereof.

5. The polyhydroxy alkanoate resin composition of any of claims 1 to 4, wherein the polyhydroxy alkanoate resin composition further comprises (C) an impact-reinforcing agent.

6. The polyhydroxy alkanoate resin composition of claim 5, comprising the impact-reinforcing agent (C) in an amount of about 0.01 to about 20 parts by weight, based on about 100 parts by weight of (A) the polyhydroxy alkanoate resin and (B) the vinyl-based copolymer resin.

7. The polyhydroxy alkanoate resin composition of claim 5, wherein the impact-reinforcing agent (C) is a core-shell copolymer prepared by grafting an unsaturated compound comprising a polymer prepared from at least one monomer comprising an acryl-based monomer, an aromatic vinyl monomer, an unsaturated nitrile monomer, or a combination thereof into a rubber polymer prepared by polymerizing a monomer comprising a diene-based monomer, an acryl-based monomer, a silicon-based monomer, or a combination thereof.

8. The polyhydroxy alkanoate resin composition of any of claims 1 to 7, further comprising (D) a poly(meth)acrylic acid alkyl ester resin.

9. The polyhydroxy alkanoate resin composition of claim 8, wherein the poly(meth)acrylic acid alkyl ester resin (D) comprises a repeating unit represented by the following Chemical Formula 2: 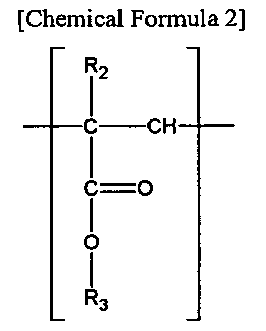 wherein in the above Chemical Formula 2,
R₂ is hydrogen or methyl, and
R₃ is substituted or unsubstituted C1 to C8 alkyl.

10. A product obtainable from the polyhydroxy alkanoate resin composition of any of claims 1 to 9.

## Patentansprüche

1. Polyhydroxyalkanoatharzzusammensetzung, umfassend:
(A) ein Polyhydroxyalkanoatharz, wobei das Polyhydroxyalkanoatharz (A) ein aliphatischer Polyester ist, der eine Wiederholungseinheit der folgenden chemischen Formel 1 umfasst: 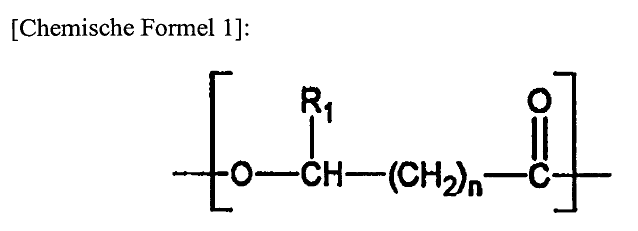 wobei in der vorstehenden chemischen Formel 1
R₁ Wasserstoff oder substituiertes oder unsubstituiertes C1- bis C15-Alkyl ist und
n eine ganze Zahl von 1 oder 2 ist; und
(B) ein Copolymerharz auf Vinylbasis, umfassend (B-1) ein Copolymer, umfassend zwei oder mehr Monomere, umfassend ein aromatisches Vinylmonomer, ein ungesättigtes Nitrilmonomer, ein Monomer auf Acrylbasis oder eine Kombination davon, und (B-2) ein kautschukmodifiziertes Pfropfcopolymer auf Vinylbasis.

2. Polyhydroxyalkanoatharzzusammensetzung nach Anspruch 1, wobei die Polyhydroxyalkanoatharzzusammensetzung das Polyhydroxyalkanoatharz (A) in einer Menge von etwa 10 bis etwa 50 Gew.-% und das Copolymerharz auf Vinylbasis (B) in einer Menge von etwa 50 bis etwa 90 Gew.-% umfasst.

3. Polyhydroxyalkanoatharzzusammensetzung nach einem der Ansprüche 1 bis 2, wobei das Copolymerharz auf Vinylbasis (B) das Copolymer (B-1) in einer Menge von etwa 40 bis etwa 80 Gew.-% und das kautschukmodifizierte Pfropfcopolymer auf Vinylbasis (B-2) in einer Menge von etwa 20 bis etwa 60 Gew.-% umfasst.

4. Polyhydroxyalkanoatharzzusammensetzung nach einem der Ansprüche 1 bis 3, wobei das kautschukmodifizierte Pfropfcopolymer auf Vinylbasis (B-2) hergestellt wird durch Pfropfen von etwa 5 bis etwa 95 Gew.-% eines Polymers auf Vinylbasis, umfassend etwa 50 bis etwa 95 Gew.-% eines ersten Monomers auf Vinylbasis, umfassend ein aromatisches Vinylmonomer, ein Monomer auf Acrylbasis oder eine Kombination davon; und etwa 5 bis etwa 50 Gew.-% eines zweiten Monomers auf Vinylbasis, umfassend ein ungesättigtes Nitrilmonomer, ein Monomer auf Acrylbasis oder eine Kombination davon, in etwa 5 bis etwa 95 Gew.-% eines Kautschukpolymers, umfassend einen Butadienkautschuk, einen Acrylkautschuk, einen Ethylen/Propylen-Kautschuk, einen Styrol/Butadien-Kautschuk, einen Acrylnitril/Butadien-Kautschuk, einen Isoprenkautschuk, ein Ethylen-Propylen-Dien-Terpolymer (EPDM), ein Polyorganosiloxan/Polyalkyl(meth)acrylat-Kautschukkomposit oder eine Kombination davon.

5. Polyhydroxyalkanoatharzzusammensetzung nach einem der Ansprüche 1 bis 4, wobei die Polyhydroxyalkanoatharzzusammensetzung des Weiteren (C) ein schlagverstärkendes Mittel umfasst.

6. Polyhydroxyalkanoatharzzusammensetzung nach Anspruch 5, umfassend das schlagverstärkende Mittel (C) in einer Menge von etwa 0,01 bis etwa 20 Gewichtsteilen auf der Basis von etwa 100 Gewichtsteilen (A) des Polyhydroxyalkanoatharzes und (B) des Copolymerharzes auf Vinylbasis.

7. Polyhydroxyalkanoatharzzusammensetzung nach Anspruch 5, wobei das schlagverstärkende Mittel (C) ein Kern-Schale-Copolymer ist, das hergestellt wird durch Pfropfen einer ungesättigten Verbindung, umfassend ein Polyner, hergestellt aus mindestens einem Monomer, umfassend ein Monomer auf Acrylbasis, ein aromatisches Vinylmonomer, ein ungesättigtes Nitrilmonomer oder eine Kombination davon, in ein Kautschukpolymer, hergestellt durch Polymerisieren eines Monomers, umfassend ein Monomer auf Dienbasis, ein Monomer auf Acrylbasis, ein Monomer auf Siliciumbasis oder eine Kombination davon.

8. Polyhydroxyalkanoatharzzusammensetzung nach einem der Ansprüche 1 bis 7, des Weiteren umfassend (D) ein Poly(meth)acrylsäurealkylesterharz.

9. Polyhydroxyalkanoatharzzusammensetzung nach Anspruch 8, wobei das Poly(meth)acrylsäurealkylesterharz (D) eine Wiederholungseinheit der folgenden chemischen Formel 2 umfasst: 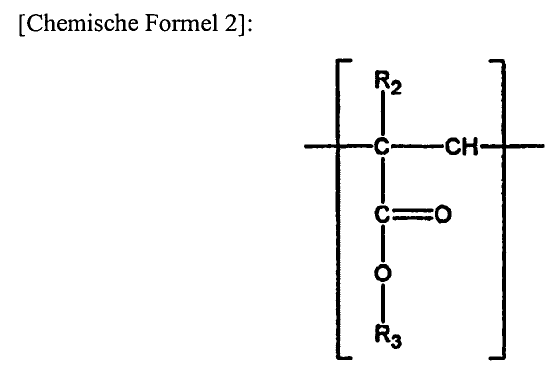 wobei in der vorstehenden chemischen Formel 2
R₂ Wasserstoff oder Methyl ist und
R₃ substituiertes oder unsubstituiertes C1- bis C8-Alkyl ist.

10. Produkt, das aus der Polyhydroxyalkanoatharzzusammensetzung nach einem der Ansprüche 1 bis 9 erhältlich ist.

## Revendications

1. Composition de résine de polyhydroxyalcanoate comprenant :
(A) une résine de polyhydroxyalcanoate, la résine de polyhydroxyalcanoate (A) étant un polyester aliphatique comprenant un motif répétitif représenté par la formule chimique 1 ci-après : 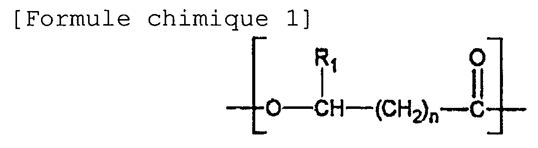 dans laquelle, dans la formule chimique 1 ci-dessus, R₁ est un atome d'hydrogène ou un groupe alkyle en C₁ à C₁₅ substitué ou non substitué, et n est un entier valant 1 ou 2 ; et
(B) une résine d'un copolymère à base vinylique comprenant (B-1) un copolymère comprenant deux monomères ou plus comprenant un monomère vinylaromatique, un nitrile monomère insaturé, un monomère à base acrylique ou une combinaison de ceux-ci, et (B-2) un copolymère greffé à base vinylique modifié par un caoutchouc.

2. Composition de résine de polyhydroxyalcanoate selon la revendication 1, la composition de résine de polyhydroxyalcanoate comprenant la résine de polyhydroxyalcanoate (A) en une quantité d'environ 10 à 50 % en poids et la résine copolymère à base vinylique (B) en une quantité d'environ 50 à environ 90 % en poids.

3. Composition de résine de polyhydroxyalcanoate selon l'une quelconque des revendications 1 à 2, dans laquelle la résine d'un copolymère à base vinylique (B) comprend le copolymère (B-1) en une quantité d'environ 40 à environ 80 % en poids et le copolymère greffé à base vinylique modifié par un caoutchouc (B-2) en une quantité d'environ 20 à environ 60 % en poids.

4. Composition de résine de polyhydroxyalcanoate selon l'une quelconque des revendications 1 à 3, dans laquelle le copolymère greffé à base vinylique modifié par un caoutchouc (B-2) est préparé par greffage d'environ 5 à environ 95 % en poids d'un polymère à base vinylique comprenant d'environ 50 à environ 95 % en poids d'un premier monomère à base vinylique comprenant un monomère vinylaromatique, un monomère à base acrylique ou une combinaison de ceux-ci ; et d'environ 5 à environ 50 % en poids d'un deuxième monomère à base vinylique comprenant un nitrile monomère insaturé, un monomère à base acrylique ou une combinaison de ceux-ci, sur environ 5 à environ 95 % en poids d'un polymère de type caoutchouc comprenant un caoutchouc butadiène, un caoutchouc acryle, un caoutchouc éthylène/propylène, un caoutchouc styrène/butadiène, un caoutchouc acrylonitrile/butadiène, un caoutchouc isoprène, un terpolymère éthylène-propylène-diène (EPDM), un composite de polyorganosiloxane/caoutchouc de poly((méth)acrylate d'alkyle), ou une combinaison de ceux-ci.

5. Composition de résine de polyhydroxyalcanoate selon l'une quelconque des revendications 1 à 4, la composition de résine de polyhydroxyalcanoate comprenant en outre (C) un agent renforçant la résistance au choc.

6. Composition de résine de polyhydroxyalcanoate selon la revendication 5, comprenant l'agent de renforcement de la résistance au choc (C) en une quantité d'environ 0,01 à environ 20 parties en poids pour environ 100 parties en poids de (A) la résine de polyhydroxyalcanoate et (B) la résine d'un copolymère à base vinylique.

7. Composition de résine de polyhydroxyalcanoate selon la revendication 5, dans laquelle l'agent de renforcement de la résistance au choc (C) est un copolymère coeur-coque préparé par greffage d'un composé insaturé comprenant un polymère préparé à partir d'au moins un monomère comprenant un monomère à base acrylique, un monomère vinylaromatique, un nitrile monomère insaturé ou une combinaison de ceux-ci, sur un polymère de type caoutchouc préparé par polymérisation d'un monomère comprenant un monomère à base diénique, un monomère à base acrylique, un monomère à base de silicium ou une combinaison de ceux-ci.

8. Composition de résine de polyhydroxyalcanoate selon l'une quelconque des revendications 1 à 7, comprenant en outre (D) une résine de poly(ester alkylique d'acide (méth)acrylique)).

9. Composition de résine de polyhydroxyalcanoate selon la revendication 8, dans laquelle la résine de poly(ester alkylique d'acide (méth)acrylique)) (D) comprend un motif répétitif représenté par la formule chimique 2 ci-après : 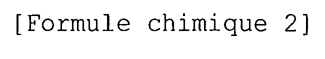 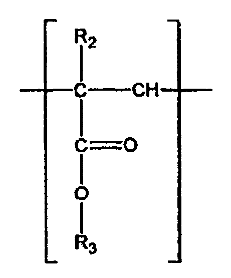 dans laquelle, dans la formule chimique 2 ci-dessus,
R₂ est un atome d'hydrogène ou le groupe méthyle, et
R₃ est un groupe alkyle en C₁ à C₈ substitué ou non substitué.

10. Produit pouvant être obtenu à partir de la composition de résine de polyhydroxyalcanoate selon l'une quelconque des revendications 1 à 9.
